# EUROPEAN PATENT SPECIFICATION

(11) **EP 1 076 068 B1**
(45) Date of publication and mention of the grant of the patent: **12.01.2005**
(21) Application number: 00306617.2
(22) Date of filing: 03.08.2000
(51) Int. Cl.: C08F 2/00, C08F 14/06, B08B 9/08

(54) **Preparation of vinyl chloride polymer**
Herstellung von PVC
Préparation de PVC

(30) Priority: 11.08.1999 JP 22732099
(43) Date of publication of application: 14.02.2001
(73) Proprietor: SHIN-ETSU CHEMICAL CO., LTD., Chiyoda-ku, Tokyo (JP)
(72) Inventor: Hoshida, Shigehiro, Kamisu, Kashima-gun, Ibaraki-ken (JP); Ishii, Tatsuo, Kamisu, Kashima-gun, Ibaraki-ken (JP); Noguki, Genji, Kamisu, Kashima-gun, Ibaraki-ken (JP)
(74) Representative: Stuart, Ian Alexander

(56) References cited:
- DD-A- 156 429
- GB-A- 1 368 393

## Description

This invention relates to a process for preparing a vinyl chloride polymer and, in preferred embodiments, to a process for preparing a vinyl chloride polymer of quality with minimal fisheyes in a reactor while effectively removing the polymer remaining in the reactor interior or polymer scale built-up on the reactor inner wall.

### BACKGROUND

In general, vinyl chloride polymers are produced by suspension polymerization and emulsion polymerization methods. More particularly, a reactor is charged with a vinyl chloride monomer alone or a mixture of a vinyl chloride monomer and a monomer copolymerizable therewith, a polymerization initiator, water, a dispersant, and optionally, other addenda. With stirring, polymerization is started and continued while maintaining at the predetermined temperature. Polymerization is terminated when a desired rate of polymerization is reached. The polymer slurry is removed from the reactor, dewatered and dried, obtaining the vinyl chloride polymer. After removal of the polymer slurry, the reactor interior is usually washed with water for removing the polymer remaining within the reactor and polymer scale built-up on the reactor inner wall.

Briefly stated, the vinyl chloride polymer is produced batchwise by repeating a process involving a series of steps of (1) charging the reactor with reactants, (2) polymerization, (3) removal of polymer slurry, and (4) water washing of the reactor.

As the polymer production process is repeated, the polymer remaining within the reactor and the polymer scale built-up on the reactor inner wall are admixed into a new batch of vinyl chloride polymer being produced. Then, particles of the vinyl chloride polymer become less prone to melting and gelling upon molding, inviting quality problems including increased defects known as fisheyes.

Techniques for preventing polymer scale deposition have been developed in the art. One technique (i) is by applying a coating solution of a polymer scale anti-stick agent to the reactor inner wall to form an anti-stick coating on the inner wall before charging of reactants and polymerization. In another technique (ii), a polymer scale anti-stick agent is added to the polymerization reaction system. These techniques are successful in reducing the polymer scale built-up on the reactor inner wall at the end of polymerization, but the residual polymer in the reactor is kept intact. Then the techniques are insufficient to overcome the quality problems including increased fisheyes.

It was also proposed to wash the reactor inner wall with water under a high pressure (hydraulic pressure 100 to 600 kg/cm²G (9.81 to 58.9 MPa·Gauge)) after removal of the polymer slurry from the reactor. The washing with high pressure water is difficult to control the pressure and is insufficient to wash away the residual polymer within the reactor and the polymer scale on the reactor inner wall, also failing to overcome the quality problems including increased fisheyes. The water washing equipment used in water washing under high pressure needs a special pump capable of producing a high hydraulic pressure and a complex means for pressure control. Such water washing equipment is expensive to manufacture.

DD-A-156 429 discloses the washing of a reactor with water at a presssure of 0.3-1.0 mPa and a flow rate of 1.75-10t/m².h.

It would be advantageous to provide a novel and improved process for preparing a vinyl chloride polymer of quality with minimal fisheyes in a reactor while effectively removing the residual polymer in the reactor or the polymer scale on the reactor inner wall.

The inventor was in search of a method of washing the reactor inner wall in such a way as to reduce fisheyes in a vinyl chloride polymer product. The inventor found that the prior art washing method using high pressure water is effective in scraping off the polymer scale on the reactor inner wall, but less effective in washing the residual polymer and the scraped polymer scale pieces away from the reactor. Through further investigations, the inventor has found that in the step of washing the reactor with water, if the volume of water per unit surface area of the reactor inner wall is increased above a specific level, the residual polymer and the polymer scale on the reactor inner wall are washed away from the reactor. The removal of the residual polymer and polymer scale from the reactor is effective for reducing fisheyes in a vinyl chloride polymer product.

The invention provides a process for preparing a vinyl chloride polymer, comprising the steps of charging a reactor with an internal volume of at least 80 m³, the reactor having an inner wall with a vinyl chloride monomer alone or a mixture of a vinyl chloride monomer and a monomer copolymerizable therewith, effecting polymerization to form a polymer, removing a slurry of the polymer from the reactor, and washing the inner wall of the reactor with water by means of a vertically movable nozzle, and repeating the series of steps. The washing step uses water in a volume of 0.01 to 0.5 m³ per square meter of the surface area of the inner wall of the reactor. Preferably, the reactor inner wall is washed with water under a pressure of 0.5 to 50 kg/cm²G (0.049 to 4.9 MPa · Gauge). The invention can be carried out so that the residual polymer remaining in the reactor and the polymer scale deposited on the reactor inner wall are washed away from the reactor, producing a vinyl chloride polymer of quality with minimal fisheyes. Washing is completed within a brief time, contributing to a significant improvement in productivity.

### DESCRIPTION OF THE PREFERRED EMBODIMENT

The process for preparing a vinyl chloride polymer according to the invention involves the steps of charging a reactor with a vinyl chloride monomer, effecting polymerization to form a polymer, removing a slurry of the polymer from the reactor at the end of polymerization, and washing the inner wall of the reactor with water, and repeating a series of the foregoing steps. The washing step uses water in a volume of 0.01 to 0.5 m³/m² of the surface area of the inner wall of the reactor.

The step of washing the reactor inner wall with water should be conducted using water in a volume of 0.01 to 0.5 m³/m² of the surface area of the reactor inner wall. The preferred volume of water is 0.03 to 0.5 m³/m², more preferably 0.03 to 0.3 m³/m².
If the wash water volume per unit surface area of the reactor inner wall is less than 0.01 m³/m². the water volume is short to wash the residual polymer in the reactor and the polymer scale on the reactor inner wall away from the reactor, failing to reduce fisheyes in a vinyl chloride polymer product. If the wash water volume is more than 0.5 m³/m², the effect of reducing fisheyes is saturated, the volume of water used in washing is more than the necessity, causing unnecessary cost, and the volume of wash water discharged from the reactor becomes increased, imposing more burden on the disposal of used water.

By adjusting the wash water volume per unit surface area of the reactor inner wall within the range of 0.01 to 0.5 m³/m² in washing the reactor inner wall with water, the need for high pressure water (water pressure 100 to 600 kg/cm²G (9.81 to 58.1 MPa · Gauge)) required in the prior art is eliminated.

In this regard, the wash water is preferably fed under a pressure of 0.5 to 50 kg/cm²G (0.0491 to 4.91 MPa · Gauge), more preferably 1 to 40 kg/cm²G (0.0981 to 3.92 MPa · Gauge), and most preferably 3 to 30 kg/cm²G (0.294 to 2.94 MPa · Gauge). Even when the pressure of wash water is less than 0.5 kg/cm²G, it is possible to wash the residual polymer in the reactor and the polymer scale on the reactor inner wall away from the reactor, but a longer time is needed for washing, resulting in a low production efficiency. On the other hand, a wash water pressure in excess of 50 kg/cm²G requires a special pump for boosting the water pressure and a complex means for controlling the water pressure so that the overall water washing system becomes expensive to manufacture and operate. A water pressure of 1 kg/cm²G or more is recommended because of a shorter washing time as well as the effect of reducing fisheyes.

The invention is applied to a large size reactor having an internal volume of at least 80 m³. When the invention is applied to such a large size reactor, the washing time is reduced, leading to efficient production.

In the practice of the invention, the equipment for washing the reactor with water may used a nozzle (such as rotary nozzle) mounted in a compartment on top of the reactor in such a retractable manner that the nozzle may be moved into and out of the reactor.

The water washing equipment with a movable nozzle may include a valve mounted on the top of the reactor for separating a compartment for the nozzle from the reactor interior. The valve may be a ball valve. When it is desired to effect water washing, the valve is opened, and the nozzle is moved down into the reactor for injecting water therein. At the end of water washing, the nozzle is retracted into the compartment, and the valve is closed.

The mechanism for moving the nozzle downward and upward in the reactor may be a cylinder mechanism or the like. A cylinder-guided lift type washer assembly is advantageous from the standpoints of cleaning effect, washing time and water volume.

The cylinder-guided lift type washer assembly includes a vertically extending cylinder, a water feed pipe received therein for longitudinal movement, and a nozzle at the lower end of the feed pipe. By a suitable drive, the feed pipe is vertically moved whereby the nozzle at the lower end of the feed pipe is projected from the lower end of the cylinder into the reactor and moved downward and then upward in the reactor while water is injected from the nozzle against the reactor inner wall. The drive for moving back and forth the feed pipe may be an electric motor, hydraulic jet cylinder, hydraulic cylinder, pneumatic cylinder or oil cylinder. A multi-stage cylinder mechanism for driving the feed pipe is also employable.

The process for preparing a vinyl chloride polymer according to the invention involves the steps of charging a reactor with a vinyl chloride monomer, effecting polymerization to form a polymer, removing a slurry of the polymer from the reactor at the end of polymerization, and washing the reactor with water. By repeating a series of the steps, a vinyl chloride polymer is produced batchwise in an efficient manner.

In the practice of the invention, there may be used in combination any of conventional techniques for preventing polymer scale deposition, for example, by coating a polymer scale anti-stick agent to the reactor inner wall or by adding a polymer scale anti-stick agent to the polymerization reaction system. The combined use of such an anti-stick technique reduces the amount of polymer scale build-up to be removed or cleaned, achieving a further reduction of the washing time and hence, a further improvement in productivity.

The vinyl chloride polymer preparing process of the invention is not particularly limited with respect to the polymerization mode although polymerization in an aqueous medium is preferable. The polymerization mode in an aqueous medium includes suspension polymerization, micro-suspension polymerization and emulsion polymerization, but not limited thereto.

The vinyl chloride polymers prepared by the process of the invention include vinyl chloride homopolymers and copolymers of a vinyl chloride monomer with another monomer copolymerizable therewith, preferably containing at least 50% by weight of vinyl chloride.

Examples of the monomer copolymerizable with vinyl chloride include olefins such as ethylene and propylene; vinyl esters such as vinyl acetate, vinyl propionate, and vinyl stearate; (meth)acrylates such as methyl acrylate, ethyl acrylate, and methyl methacrylate; esters of acids such as maleic acid and fumaric acid; nitrile compounds such as acrylonitrile; vinylidene compounds such as vinylidene chloride; styrene; and other copolymerizable monomers. These monomers may be used alone or in admixture.

A polymerization initiator is generally used in effecting polymerization. It may be selected from oil and water soluble initiators commonly used in the polymerization of vinyl chloride monomers though not limited thereto. Examples of the oil-soluble initiator include organic peroxides such as lauroyl peroxide, 3,5,5-trimethylhexanoyl peroxide, t-butyl peroxypivalate, t-butyl peroxyneodecanate, diisopropyl peroxydicarbonate, di-2-ethylhexyl peroxydicarbonate, and acetylcyclohexylsulfonyl peroxide; and azo compounds such as α,α'-azobisisobutyronitrile and α,α'-azobis-2,4-dimethylvaleronitrile, which may be used alone or in combination of two or more.

Examples of the water-soluble initiator include ammonium persulfate, potassium persulfate, and hydrogen peroxide, which may be used alone or in combination of two or more depending on a particular polymerization mode.

The polymerization initiator is generally used in an amount of about 0.01 to 3 parts by weight per 100 parts by weight of the monomer charge.

A dispersant is often used in suspension polymerization. Well-known dispersants are useful, for example, partially saponified polyvinyl alcohol, methyl cellulose, hydroxypropyl cellulose, polyethylene oxide, gelatin, vinyl acetate-maleic anhydride copolymers, styrenemaleic anhydride copolymers, and starch. These dispersants may be used alone or in admixture of two or more. For micro-suspension polymerization and emulsion polymerization, an emulsifier is often used. Well-known emulsifiers are useful, for example, anionic surfactants such as sodium alkyl sulfates, sodium alkylbenzenesulfonates, sodium α-olefinsulfonates, and sodium fatty acid; and nonionic surfactants such as polyoxyethylene alkyl ethers, polyoxyethylene alkyl phenol ethers, and sorbitan fatty acid esters. These emulsifiers may be used alone or in admixture of two or more.

The dispersant or emulsifier is generally used in an amount of about 0.01 to 3 parts by weight per 100 parts by weight of the monomer charge.

In the practice of the invention, a molecular weight adjusting agent, chain transfer agent, pH adjusting agent, gel modifier, antistatic agent or the like may be used if necessary. The polymerization initiator, dispersant, emulsifier, molecular weight adjusting agent and other agents used in polymerization reaction may be initially added together to the polymerization reaction system or added in divided portions during polymerization reaction. The remaining polymerization conditions may be selected from commonly used conditions, depending on a particular monomer type and polymerization mode.

### EXAMPLES

Examples of the invention are given below by way of illustration and not by way of limitation.

### Examples 1-10 and Comparative Examples 1-3

There was furnished a stainless steel polymerization reactor having an internal volume of 80 m³ equipped with a reflux condenser, outer jacket, baffle and agitator. The reactor was further equipped at the top in a sealed manner with a cylinder-guided lift type washer assembly having a vertically movable feed water metal pipe and a nozzle at the distal end thereof. The nozzle was a rotating nozzle. The drive power for moving up and down the feed pipe and the drive power for rotating the nozzle were produced by hydraulic water drives. Using the reactor, a vinyl chloride polymer was prepared as follows.

After deaeration, the reactor was charged with 40 m³ of deionized water, 30 kg of partially saponified polyvinyl alcohol, 15 kg of di-2-ethylhexyl peroxydicarbonate, and 30 tons of vinyl chloride monomer. With stirring, polymerization was initiated by heating at 57°C. Polymerization was continued while maintaining an internal temperature of 57°C.

Polymerization was terminated when the rate of polymerization reached 85%. The slurry of vinyl chloride polymer in water was removed from the reactor. Thereafter, the inner wall of the reactor was washed with water under the conditions shown in Tables 1 and 2.

In succession, the second and subsequent batches were performed by charging, effecting polymerization, removing the polymer slurry, and water washing under the same conditions as above. In this way, the preparation of vinyl chloride polymer (PVC) was repeated until 50 continuous batches were completed.

The polymer slurry samples from the 25th and 50th batches were dewatered and dried to give vinyl chloride polymer samples, which were examined for fisheyes by the following test. The results are shown in Tables 1 and 2. Fisheye test

Using a 6-inch roll mill, 100 parts of the vinyl 0.1 part of barium stearate, 0.1 part of cadmium stearate, 0.8 part of cetanol, 2.0 parts of a tin stabilizer, 0.5 part of titanium dioxide, and 0.1 part of carbon black, all in part by weight, were milled at 140°C for 4 minutes. The mass was sheeted into a sheet of 0.3 mm thick. The number of white clear particles per 100 cm² of the sheet was counted.

**Table 1**

| | Example | | | | | | |
|---|---|---|---|---|---|---|---|
| | 1 | 2 | 3 | 4 | 5 | 6 | 7 |
| Reactor inner wall surface area (m²) | 105 | 105 | 105 | 105 | 105 | 105 | 105 |
| Volume of wash water (m³) | 1.2 | 3.5 | 15 | 30 | 30 | 50 | 15 |
| Water volume per surface area (m³/m²) | 0.0114 | 0.033 | 0.14 | 0.29 | 0.29 | 0.48 | 0.14 |
| Washing time (min) | 5 | 5 | 5 | 15 | 25 | 40 | 5 |
| Water pressure(kg/cm²G) | 15 | 15 | 15 | 5 | 30 | 15 | 0.3 |
| (MPa·Gauge) | 1.47 | 1.47 | 1.47 | 0.49 | 2.94 | 1.47 | 0.029 |
| Fisheyes in 25th batch PVC (/100 cm²) | 18 | 12 | 11 | 10 | 9 | 10 | 16 |
| Fisheyes in 50th batch PVC(/100 cm²) | 18 | 14 | 10 | 12 | 8 | 7 | 18 |

**Table 2**

| | Example | | | Comparative Example | | |
|---|---|---|---|---|---|---|
| | 8 | 9 | 10 | 1 | 2 | 3 |
| Reactor inner wall surface area (m²) | 105 | 105 | 105 | 105 | 105 | 105 |
| Volume of wash water (m³) | 15 | 15 | 15 | 0.6 | 80 | 0.6 |
| Water volume per surface area (m³/m²) | 0.14 | 0.14 | 0.14 | 0.0057 | 0.76 | 0.0057 |
| Washing time (min) | 5 | 5 | 5 | 5 | 80 | 150 |
| Water pressure (kg/cm²G) | 1 | 40 | 70 | 15 | 15 | 5 |
| (MPa·Gauge) | 0.0981 | 3.92 | 6.87 | 1.47 | 1.47 | 0.49 |
| Fisheyes in 25th batch PVC (/100 cm²) | 16 | 10 | 11 | >100 | 9 | >100 |
| Fisheyes in 50th batch PVC (/100 cm²) | 17 | 10 | 10 | >100 | 10 | >100 |

As is evident from Tables 1 and 2, Comparative Examples 1 and 3 using wash water in a small volume of 0.0057 m³/m² of the surface area of the reactor inner wall yielded vinyl chloride polymers containing more than 100 fisheyes. Especially in Comparative Example 3, more than 100 fisheyes were left even though the washing time was extended to 150 minutes. Comparative Example 2 used wash water in a volume of 0.76 m³/m² of the surface area of the reactor inner wall, that is, a large volume of wash water, and a longer washing time was required.

By contrast, Examples 1 to 10 using wash water in an appropriate volume of 0.01 to 0.5 m³/m² of the surface area of the reactor inner wall yielded vinyl chloride polymers containing less fisheyes while brief washing was satisfactory.

According to the invention, a vinyl chloride polymer of quality with minimal fisheyes is obtainable. The time required for washing the reactor with water is reduced to achieve a significant improvement in productivity.

Although some preferred embodiments have been described, many modifications and variations may be made thereto in light of the above teachings. It is therefore to be understood that the invention may be practiced otherwise than as specifically described.

## Claims

1. A process for preparing a vinyl chloride polymer, comprising the steps of charging a reactor having an inner wall with a vinyl chloride monomer alone or a mixture of a vinyl chloride monomer and a monomer copolymerizable therewith, effecting polymerization to form a polymer, removing a slurry of the polymer from the reactor, and washing the inner wall of the reactor with water, and repeating the series of steps, wherein
(a) the reactor has an internal volume of at least 80 m³;
(b) the washing step uses water in a volume of 0.01 to 0.5 m³ per square meter of the surface area of the inner wall of the reactor; and
(c) the washing step uses a vertically movable nozzle.

2. The process of claim 1 wherein the reactor inner wall is washed with water under a pressure of 0.5 to 50 kg/cm²G (0.049 to 4.9 MPa.Gauge).

## Patentansprüche

1. Verfahren zur Herstellung eines Vinylchloridpolymers, umfassend die Schritte des Befüllens eines Reaktors, der eine Innenwand aufweist, mit einem Vinylchloridmonomer alleine oder einem Gemisch aus einem Vinylchloridmonomer und einem Monomer, das damit copolymerisierbar ist, der Durchführung einer Polymerisation, um ein Polymer zu bilden, des Entfernens einer Aufschlämmung des Polymers aus dem Reaktor und des Waschens der Innenwand des Reaktors mit Wasser sowie die Wiederholung der Schritte, worin
(a) der Reaktor ein Innenvolumen von zumindest 80 m³ aufweist;
(b) beim Waschschritt Wasser in einem Volumen von 0,01 bis 0,5 m³ pro Quadratmeter der Oberfläche der Innenwand des Reaktors verwendet wird; und
(c) beim Waschschritt eine vertikal bewegbare Düse verwendet wird.

2. Verfahren nach Anspruch 1, worin die Reaktorinnenwand mit Wasser unter einem Druck von 0,5 bis 50 kg/cm² (0,049 bis 4,9 MPa Überdruck) gewaschen wird.

## Revendications

1. Procédé de préparation d'un polymère de chlorure de vinyle comprenant les étapes consistant à charger dans un réacteur ayant une paroi interne un monomère de chlorure de vinyle seul ou un mélange d'un monomère de chlorure de vinyle et d'un monomère copolymérisable avec celui-ci, effectuer la polymérisation pour former un polymère, retirer une suspension du polymère du réacteur, et laver la paroi interne du réacteur avec de l'eau, puis répéter la série d'étapes, dans lequel (a) le réacteur a un volume interne d'au moins 80 m³ ; (b) l'étape de lavage utilise de l'eau dans un volume de 0,01 à 0,5 m³ par mètre carré de la surface spécifique de la paroi interne du réacteur ; et (c) l'étape de lavage utilise une buse à déplacement vertical.

2. Procédé selon la revendication 1, dans lequel la paroi interne du réacteur est lavée avec de l'eau à une pression de 0,5 à 50 kg/cm²G (0,049 à 4,9 MPa au manomètre).
